# EUROPEAN PATENT APPLICATION

(11) **EP 1 770 077 A1**
(43) Date of publication of application: **04.04.2007**
(21) Application number: 05740637.3
(22) Date of filing: 22.04.2005
(51) Int. Cl.: C04B 41/48, C08J 5/24

(54) **METHOD FOR THE POLYMERISATION OF RESINS THAT ARE APPLIED TO MARBLE, USING MICROWAVES**

(30) Priority: 28.05.2004 ES 200401298
(71) Applicant: Asociacion Empresarial de Investigacion Centro Tecnologico Del Marmol y la Piedra, 30430 Cehegin Murcia (ES)
(72) Inventor: ROMERA FERNANDEZ, Jesus, E-30430 CEHEGIN (Murcia) (ES); VILA MARIN, Maria del Pilar, E-30430 CEHEGIN (Murcia) (ES); SANCHEZ HERNANDEZ, David, E-30002 MURCIA (ES); DIAZ MORCILLO, Alejandro, E-30202 CARTAGENA (Murcia) (ES); MARTINEZ GONZALEZ, Antonio, Manuel, E-30310 CARTAGENA (Murcia) (ES); MONZO CABRERA, Juan, E-30205 CARTAGENA (Murcia) (ES)
(74) Representative: Carpintero Lopez, Francisco
(86) International application number: PCT/ES2005/000212
(87) International publication number: WO 2005/121046

(57) **Abstract**

The invention relates to a process for curing resins or polymers in the marble industry, comprising the use of microwaves, which allows achieving a uniform polymerization of the resin or polymer by means of preheating the stone before applying the resin.

## Description

The present invention relates to a process for curing resins or polymers in the marble industry, comprising the use of the microwaves.

### Background of the Invention

Due to the fact that resins or polymers carry out several functions in the marble industry, its use is currently very important. The most frequent functions of resins are:
- Reinforcement of slabs, bands and boards.
- Puttying and filling of large cavities.
- Surface finishing, i.e., improvement of the aesthetic appearance of the material covering the small pores to subsequently apply the polishing process.

The polymers or resins used in these processes, generally epoxy resins and polyester, are traditionally mixed with catalysts and chemical hardeners to accelerate their curing, leaving the stone treated with the resin in the open air for enough time for the curing to end. However, this resin curing system is not very practical because it extends the processing of the marble stone too much.

One of the methods currently used to accelerate resin curing is the irradiation with UV waves. The use of this system requires the addition of photochemical initiators and although it considerably reduces the curing time, it has problems when the pores of the stone have a certain depth. In these cases, the UV rays cannot penetrate the resin sufficiently and the inner area thereof, which contacts the stone, is not polymerized, making the subsequent polishing process difficult.

Another system used to accelerate resin curing is the irradiation with microwaves. This method has the advantage that microwaves penetrate the resin or polymer more deeply, allowing the curing thereof to be more effective, even when the marble stone has deep cavities. The problems set forth with microwaves are that the loss factor of marble is usually much lower than that of resin or polymer. As a result, marble heats up and cools more slowly than resin or polymer. Therefore, when the stone treated with resin is heated, a heat transfer occurs from the resin to the stone, which forces a more extended heating to achieve the curing. This also causes a temperature gradient between the side of the resin which is in contact with the stone and the side of the stone which is in the outer surface, giving rise to an unequal curing of the resin. Additionally, the specific heat of stones varies very much from one type to another according to their composition, forcing the calibration of the production chain every time it is a different type of stone.

### Description of the invention

The object of the present invention is to eliminate the problems set forth, accelerating the curing of the resin, while at the same time it allows a more efficient energy application because it reduces the microwave contribution necessary to reach the polymerization temperature.

The process for,curing a resin which is applied on the marble stone referred to in the present invention, comprises the following steps:
i) cutting the marble stone;
ii) drying;
iii) preheating the stone;
iv) applying the resin on the surface of the stone;
v) resting the resin on the stone; and
vi) curing the resin by means of applying microwaves.

Once the marble stone has been cut using any of the methods known in the state of the art and before carrying out the following steps, it is important that the stone has been sufficiently cleaned. Then the stone is dried to eliminate any water residue that may make the subsequent application of the resin difficult. This treatment is important so that the resin can optimally penetrate the pores and the veins of the stone. In order to carry out the drying, any process selected from the group of irradiation by means of microwaves or heating in an electric or propane oven can be applied.

A first aspect of the present invention is that the stone is preheated before applying the resin. The objective of this step is to avoid the heat transfer between the resin and the stone during the curing of the resin by means of irradiation with microwaves. In addition to reducing the microwave irradiation time, a more uniform curing of the resin is achieved. The need to calibrate the process according to the stone on which the resin is applied is also minimized as much as possible; because the stone, whichever type it may be, will be at a certain temperature when said resin is applied. The choice of the temperature at which the stone is heated only depends on the type of resin applied, not on the stone.

Any process selected from the group of irradiation by means of microwaves or heating in an electric or propane oven can be applied to carry out the preheating. The initial temperature of the marble is generally comprised between 36°C, the most suitable temperature for polyester, and 70°C, the most suitable temperature for epoxy resins.

Once the stone has reached the desired temperature, the resin or polymer is applied. Paraffin-free polyesters are preferably used for the surface finishing, because it has been found that said paraffins form a film between the stone and the resin which significantly reduces the adhesion between both. The use of epoxy resins for reinforcing or filling large cavities is also frequent. For the purpose of subsequently accelerating the curing step, it is possible to add curing catalysts or dopants on the resin, preferably those selected from the group comprising calcium carbonate or calcium sulfate.

The following step of the process consists of allowing the stone to rest during a time period that is preferably comprised between 5 and 15 minutes, for the purpose of allowing the resin to penetrate and soak the marble and thus achieve a better adherence.

Then microwaves are applied on the resin coating the stone. The power, frequency and application time of the microwaves used during the curing essentially depend on the type of resin used. The power is preferably comprised between 0.01 and 10 W/cm³, the microwave frequency between 2.4 and 2.6 GHz and the curing time between 20 and 250 s.

### Examples

### Example 1

Polymerization tests have been carried out by applying microwaves in Crema Sierra Puerta type marble. The stones used in the test have dimensions of 5x5x2 cm. The marble has been preheated to a temperature of 36°C. The applied polymer was of the commercial epoxy type with mixture proportions of 75 parts Epomar 2003-A and 25 parts Epomar 2003-B (hardener). The applied microwave power was 600 W and the frequency was 2.45 GHz. The irradiation time was 80 seconds. A good polymerization was observed.

### Example 2

Polymerization tests have been carried out by applying microwaves in Crema Sierra Puerta type marble. The stones used in the test have dimensions of 5x5x2 cm. The marble has been preheated at a temperature of 40°C. The applied polymer was amine-preaccelerated polyester doped with calcium carbonate in a 1:1 ration. The applied microwave power was 100 W and the frequency was 2.45 GHz. The irradiation time was 80 seconds. A good polymerization was observed.

### Example 3

The marble used in this test was of the Travertine type in commercial slabs of 60x30x2 cm. The resins used were epoxy resins in a 75 part Epomar A: 25 part Epomar B mixture. The travertine marble was preheated to 60°C. The polymerization was good with a microwave power of 100W and the frequency was 2.45 GHz. The irradiation time was 60 seconds. A good polymerization was observed.

## Claims

1. A process for curing a resin which is applied on marble stone, **characterized in that** it comprises the following steps:
i) cutting the marble stone;
ii) drying;
iii) preheating the stone;
iv) applying the resin on the surface of the stone;
v) resting the resin on the stone; and
vi) curing the resin by means of applying microwaves.

2. A process according to claim 1, **characterized in that** in addition to said resin, curing catalysts are added.

3. A process according to claim 2, **characterized in that** said curing catalysts are selected from the group comprising calcium carbonate or calcium sulfate.

4. A process according to any of the previous claims, **characterized in that** said drying ii) is carried out by means of a process selected from the group of irradiation by means of microwaves or heating in an electric or propane oven.

5. A process according to any of the previous claims, **characterized in that** said preheating iii) is carried out by means of a process selected from the group of irradiation by means of microwaves or heating in an electric or propane oven.

6. A process according to any of the previous claims, **characterized in that** said preheating iii) is carried out to a temperature between 36 and 70°C.

7. A process according to any of the previous claims, **characterized in that** said resin is selected from the group of epoxy resins and paraffin-free polyesters.

8. A process according to any of the previous claims, **characterized in that** the microwave power which is applied during the curing vi) of the resin is comprised between 0.01 and 10 W/cm³.

9. A process according to any of the previous claims, **characterized in that** the microwave frequency which is applied during the curing vi) of the resin is comprised between 2.4 and 2.6 GHz.

10. A process according to any of the previous claims, **characterized in that** the curing vi) time is comprised between 20 and 250 s.

## Amended claims

### Amended claims under Art. 19.1 PCT

**1.** A process for curing a resin which is applied on marble stone, **characterized in that** it comprises the following steps:
i) cutting the marble stone;
ii) drying;
iii) preheating the stone; remaining warm during the process for the application and subsequent curing of the resin;
iv) applying the resin on the surface of the stone;
v) resting the resin on the stone; and
vi) curing the resin by means of applying microwaves.

**2.** A process according to claim 1, **characterized in that** in addition to said resin, curing catalysts are added.

**3.** A process according to claim 2, **characterized in that** said curing catalysts are selected from the group comprising calcium carbonate or calcium sulfate.

**4.** A process according to any of the previous claims, **characterized in that** said drying ii) is carried out by means of a process selected from the group of irradiation by means of microwaves or heating in an electric or propane oven.

**5.** A process according to any of the previous claims, **characterized in that** said preheating iii) is carried out by means of a process selected from the group of irradiation by means of microwaves or heating in an electric or propane oven.

**6.** A process according to any of the previous claims, **characterized in that** said preheating iii) is carried out to a temperature between 36 and 70°C.

**7.** A process according to any of the previous claims, **characterized in that** said resin is selected from the group of epoxy resins and paraffin-free polyesters.

**8.** A process according to any of the previous claims, **characterized in that** the microwave power which is applied during the curing vi) of the resin is comprised between 0.01 and 10 W/cm³.

**9.** A process according to any of the previous claims, **characterized in that** the microwave frequency which is applied during the curing vi) of the resin is comprised between 2.4 and 2.6 GHz.

**10.** A process according to any of the previous claims, **characterized in that** the curing vi) time is comprised between 20 and 250 s.
